# EUROPEAN PATENT SPECIFICATION

(11) **EP 3 176 041 B1**
(45) Date of publication and mention of the grant of the patent: **26.09.2018**
(21) Application number: 15197612.3
(22) Date of filing: 02.12.2015
(51) Int. Cl.: B60R 21/36

(54) **AN INFLATABLE AIRBAG FOR A MOTOR VEHICLE SAFETY DEVICE**
AUFBLASBARER AIRBAG FÜR EINE SICHERHEITSVORRICHTUNG EINES KRAFTFAHRZEUGS
AIRBAG GONFLABLE POUR DISPOSITIF DE SÉCURITÉ DE VÉHICULE À MOTEUR

(43) Date of publication of application: 07.06.2017
(73) Proprietor: Autoliv Development AB, 447 83 Vårgårda (SE)
(72) Inventor: JONSSON HOLM, David, 41260 Göteborg (SE); MAGNUSSON, Ulf, 441 57 Alingsås (SE)
(74) Representative: Parry, Simon James

(56) References cited:
- US-A1- 2014 291 054

## Description

The present invention relates to an inflatable airbag for a motor vehicle safety device. The airbag of the present invention is particularly suitable for use as a pedestrian airbag.

When a motor vehicle is involved in a frontal impact with a pedestrian, it is known to be common for the body of the pedestrian to strike the windscreen of the vehicle which can result in serious injury to the pedestrian and significant damage to the vehicle which can result in injury to the vehicle occupants. In an attempt to alleviate this, it has been proposed to provide a motor vehicle with a so-called pedestrian airbag of a type which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood (sometimes referred to as the vehicle's bonnet), for inflation in a generally rearwards direction across the windscreen. The rear of the hood may be lifted by another air-bag, a piston or another arrangement, to allow sufficient space for the pedestrian airbag to inflate so that it deploys in a manner effective to cover at least part of the windscreen and/or A-pillars of the vehicle, thereby cushioning the impact of a pedestrian with these parts of the vehicle. Another advantage of lifting the hood in such a situation is that the hood will become spaced above the engine block and other hard objects in the vehicle's engine bay, such that the hood can then deform upon impact with the pedestrian, thereby absorbing impact energy. Alternatively, it has also been proposed to configure the pedestrian airbag such that as it begins to inflate upon actuation it performs the hood-lifting function itself.

An air bag of this type can be found in US2014/0291054 A1 which discloses an inflatable airbag for a motor vehicle safety device, the airbag having an inflatable volume for the receipt of inflating gas, said inflatable volume comprising a primary chamber and a secondary chamber said secondary chamber being fluidly connected to said primary chamber.

In the case of pedestrian airbags of the type described above, which are intended to lift the rear part of the vehicle's hood as well as to deploy over the windscreen upon inflation, it has been found to be difficult to ensure that the airbag inflates in an appropriate manner to lift the rear part of the hood sufficiently quickly to permit the airbag to then continue to inflate in a manner effective to deploy across the windscreen. One of the problems in this regard is that pedestrian airbags must be relatively large, because of the size of the windscreen across which they are required to deploy, which means that they have a correspondingly large inflatable volume with considerable width across the transverse direction of the vehicle, which can take a relatively long time to achieve full thickness during inflation. It has been found to be difficult to satisfy the requirement for a forward region of the airbag to achieve sufficient thickness to lift the rear part of the hood upon actuation, whilst also ensuring that the large inflatable volume of the airbag achieves sufficient thickness as it deploys across the windscreen to provide effective protection to a pedestrian.

Another problem which can sometimes occur with pedestrian airbags which deploy from beneath a rear part of the vehicle's hood, is that their deployment can be inhibited or disrupted by the vehicle's windscreen wipers, which of course are usually provided in the so-called scuttle region at the base of the windscreen and beneath or behind the rear edge of the hood. If the main part of the airbag which must deploy over the windscreen becomes snagged or caught on the windscreen wipers as it inflates, then it may not achieve an appropriate deployed position across the windscreen, or its deployment may be slowed.

Whilst the present invention is described herein within specific reference to specific embodiments provided in the form of a pedestrian airbags, it is to be noted, however, that the invention could alternatively be embodied in other types of airbag safety device such as, for example, inflatable side curtains, driver or passenger airbags, knee bags, or side airbags.

It is an object of the present invention to provide an improved inflatable airbag for a motor vehicle safety device.

According to the present invention, there is provided an inflatable airbag for a motor vehicle safety device, the airbag having an inflatable volume for the receipt of inflating gas, said inflatable volume comprising a primary chamber and a secondary chamber, said secondary chamber being fluidly connected to said primary chamber via a connecting flow port arranged between the chambers, the airbag being characterised by a gas guide provided inside the primary chamber and which has: a gas inlet arranged to receive a flow of said inflating gas into the gas guide; a primary outlet arranged to direct some of said inflating gas into the primary chamber in a first flow direction to inflate the primary chamber; and a secondary outlet aligned with said connecting flow port and arranged to direct some of said inflating gas through said connecting flow port and into the secondary chamber in a second flow direction to inflate the secondary chamber; said first and second chambers thereby being configured to deploy into abutting and superimposed positions upon inflation, and wherein said first and second flow directions are substantially orthogonal.

Preferably, said secondary outlet of the gas guide is coincident with the connecting flow port between said primary and secondary chambers.

Advantageously, the gas guide is fixed in position inside said primary chamber at least partly by a connection extending around said secondary outlet of the gas guide and said connecting flow port and which interconnects said gas guide and said primary chamber.

Conveniently, said gas guide, and said primary and secondary chambers are formed from flexible sheet material, the gas guide being fixed in position inside said primary chamber at least partly by an interconnecting seam which: extends around said secondary outlet of the gas guide and said connecting flow port; and interconnects the flexible sheet material of said gas guide and said primary chamber.

Preferably, the flexible sheet material of said secondary chamber is implicated in said interconnecting seam such that the seam interconnects said gas guide, said primary chamber and said secondary chamber.

Optionally, said gas guide has two said primary outlets arranged to direct respective flows of said inflating gas into said primary chamber in opposite first flow directions to inflate the primary chamber.

Advantageously, at least one additional flow port is provided between said primary and secondary chambers, wherein the or each said additional flow port is arranged to permit inflating gas to flow from one said chamber to the other.

Conveniently, said primary chamber has a larger volume than said secondary chamber.

Preferably, said gas guide is formed from woven fabric material.

Optionally, said gas guide comprises two superimposed sheets of said fabric so as to have a double-thickness of fabric.

The airbag may be provided in the form of a pedestrian airbag arrangement on a motor vehicle having a hood, a windscreen, and a scuttle at the base of the windscreen, wherein: said primary chamber is configured for inflation, upon deployment of the airbag, so as to extend over or across at least part of the windscreen; and said secondary chamber is configured for inflation, upon deployment of the airbag, so as to adopt a deployed position between part of the primary chamber and the scuttle.

Preferably, the motor vehicle has at least one windscreen wiper having an inoperative position in the region of said scuttle, said deployed position of the secondary chamber being above or adjacent the inoperative position of the or at least one said windscreen wiper.

Conveniently, the motor vehicle has a pair of said windscreen wipers, said deployed position of the secondary chamber being between the inoperative positions of said windscreen wipers.

Advantageously, the airbag is provided in combination with an inflator arranged to direct inflating gas into said gas guide, wherein the inflator is mounted to an underside of the hood.

Optionally, said second flow direction is directed generally downwardly, towards the scuttle.

Alternatively, the airbag may be provided in the form of a pedestrian airbag arrangement on a motor vehicle having a hood, a windscreen and a scuttle at the base of the windscreen, wherein: said primary chamber is configured for inflation, upon deployment of the airbag, to as to extend over or across at least part of the windscreen; and said secondary chamber is configured, upon deployment of the airbag, so as to adopt a deployed position between part of the primary chamber and the hood.

Advantageously, the airbag is provided in combination with an inflator arranged to direct inflating gas into said gas guide, wherein the inflator is mounted to the scuttle.

Optionally, said second flow direction is directed generally upwardly, towards said hood.

Optionally, said secondary chamber is configured to lift a rear part of the hood during inflation.

Conveniently, said deployed positon of the secondary chamber is at least partly beneath a rear part of the hood.

Conveniently, the or each said first flow direction is directed generally transversely across the vehicle.

The airbag may be configured such that when it is inflated said primary chamber has a larger transverse dimension, measured across the vehicle, than said secondary chamber.

So that the invention may be more readily understood, and so that further features thereof may be appreciated, embodiments of the invention will now be described by way of example with reference to the accompanying drawings in which:
Figure 1 is a plan view of a first primary sheet of flexible material which is used to form a primary chamber of an airbag;
Figure 2 is a plan view of a second primary sheet of flexible material which is used to form the primary chamber of the airbag;
Figure 3 is a plan view of a secondary sheet of flexible material which is used to form a secondary chamber of the airbag;
Figure 4 is a plan view of a first guide sheet of flexible material which is used to form a gas guide of the airbag;
Figure 5 is a plan view of a second guide sheet of flexible material which is used to form the gas guide;
Figure 6 is a plan view of a reinforcing patch for the gas guide;
Figure 7 is a plan view of a first tether sheet which is used to form a first tether for the airbag;
Figure 8 is a plan view of a second tether which is used to form a second tether for the airbag;
Figure 9 is a plan view illustrating a partially formed gas guide;
Figure 10 is a plan view illustrating the partially formed gas guide illustrated in figure 9,
affixed to the first primary sheet illustrated in figure 1;
Figure 11 is a schematic cross-sectional view taken along line XI-XI of figure 10;
Figure 12 is a plan view of the gas guide;
Figure 13 is a plan view illustrating a finished airbag in accordance with an embodiment of the invention;
Figure 14 is a schematic cross-sectional view taken along line XIV-XIV of figure 13;
Figure 15 is a plan view of the airbag shown in figure 13, illustrating the airbag after initial folding steps to package the airbag;
Figure 16 is a schematic cross-sectional view taken along line XVI-XVI of figure 15;
Figure 17 is a perspective view illustrating part of the packaged airbag in combination with an inflator;
Figure 19 is a schematic longitudinal cross-sectional view showing an airbag installed on a motor vehicle in accordance with an embodiment of the invention, showing the airbag in a deployed configuration; and

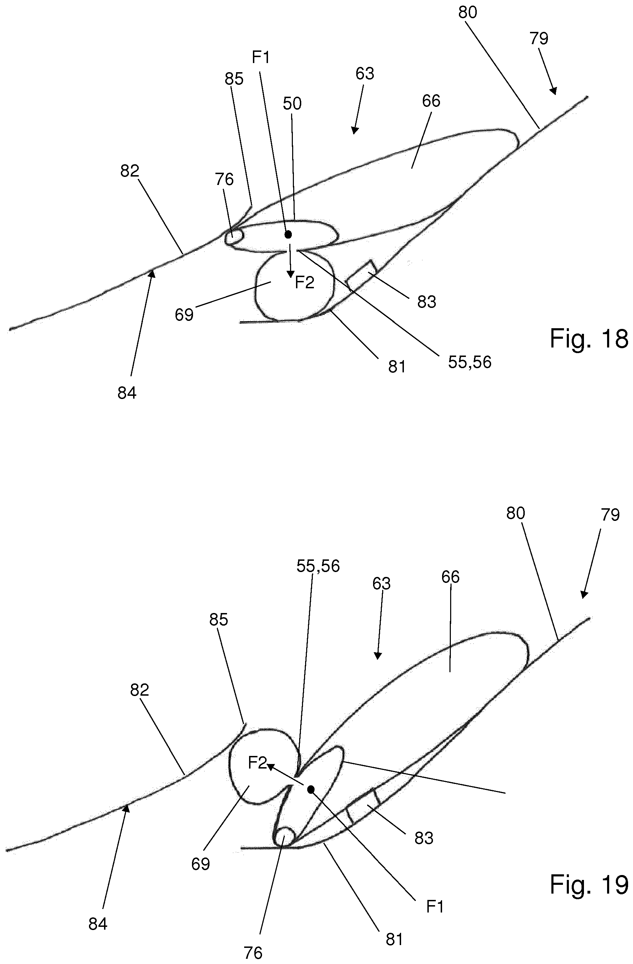

Figure 18 is a view similar to that of figure 18, but which shows the airbag installed on a motor vehicle in a different orientation, again showing the airbag in a deployed configuration.

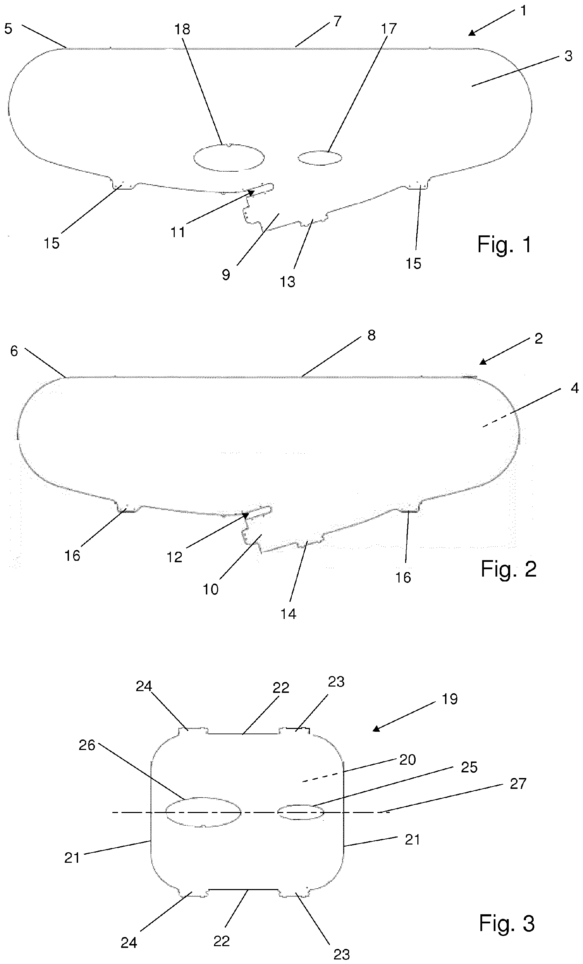

Referring initially to figures 1 to 17, the construction and resulting configuration of an exemplary airbag in accordance with the present invention will be described. As will become apparent, the particular airbag described herein is intended to take the form of a so-called pedestrian airbag, although it is to be appreciated that the present invention could be embodied in airbags of other types.

Figures 1 and 2 show, respectively, a first primary sheet 1 of flexible material and a second primary sheet 2 of flexible material, from which the airbag is produced. The sheets 1, 2 are preferably formed from woven fabric material and may optionally each have a coating, of a type known *per se*, applied to one side so as to reduce the sheets' permeability to inflating gas. In the orientation of the primary sheets 1, 2 illustrated in figures 1 and 2, the first sheet 1 may be coated on its upwardly directed surface 3, and the second sheet 2 may be coated on its downwardly directed surface 4. As will become apparent, when the resulting airbag has been produced, the first and second primary sheets 1, 2 will cooperate to define a primary chamber of the airbag, with the coated surface 3, 4 of each sheet 1, 2 being located inside the inflatable volume of the primary chamber.

As will be noted, the primary sheets 1, 2 are of substantially identical size and shape, so that they may be superimposed on one another in such a manner that their respective peripheral edges 5, 6 will become aligned. The particular sheets 1, 2 illustrated are generally elongate, and may very approximately be considered to have a somewhat triangular form. Each sheet 1, 2 has a pair of oppositely arranged ends of rounded form, between which extends a straight region 7, 8 of the respective peripheral edge 5, 6. Opposite to the straight edge regions 7, 8, each sheet has a relatively large inlet tab 9, 10 which projects outwardly from a central position of the sheet, so as to define a re-entrant region 11, 12 to the respective peripheral edge 5, 6. Each inlet tab 9, 10 has a relatively small tether tab 13, 14 which projects outwardly from the peripheral edge 5, 6 of the respective sheet 1, 2. Additionally, each sheet 1, 2 also has a pair of substantially identical and spaced apart anchor tabs 15, 16, each of which is provided on a respective side of the centrally located inlet tab 9, 10. As will be appreciated, when the two primary sheets 1, 2 are superimposed on one another, all of the aforementioned features of the first sheet 1 will become aligned with the corresponding features of the second sheet 2.

The first and second primary sheets 1, 2 differ from one other only by the fact that the first sheet 1 is provided with a pair of flow apertures 17, 18 formed through the fabric, whereas the second sheet 2 has no such apertures. The two apertures 17, 18 illustrated are of generally elliptical form, although it is to be appreciated that the apertures can take different forms in other embodiments. In more detail, it will be noted that the two apertures 17, 18 are both provided in a generally central position of the sheet, between the two rounded ends of the sheet, and generally adjacent the edge of the sheet having the inlet tab 9 and the resulting re-entrant edge region 11, which will define an inlet region of the finished airbag as will become clear hereinafter. One of the apertures (denoted by reference 17 in figure 1) is smaller than the other (denoted by reference 18 in figure 1). The relatively large aperture 18 is provided generally adjacent the re-entrant edge region 11.

Turning now to consider figure 3, there is illustrated a secondary sheet 19 of flexible material which, as will be described in further detail hereinafter, will define a secondary chamber of the finished airbag. The secondary sheet 19 is preferably formed from the same woven fabric material as the two primary sheets 1, 2, and may also optionally have a similar coating applied to one side so as to reduce the sheet's permeability to inflating gas. In the orientation of the secondary sheet 19 illustrated in figures 3, the sheet 19 may be coated on its downwardly directed surface 20. As will become apparent, when the resulting airbag has been produced, the secondary sheet 19 will define a secondary chamber of the airbag, with the coated surface 20 being located inside the inflatable volume of the secondary chamber.

The secondary sheet 19 is illustrated in figure 3 in a configuration in which it is generally rectangular, and very nearly square, in shape having somewhat rounded corners. Between the rounded corners, the sheet 19 thus has a pair of oppositely arranged end edges 21, and a pair of oppositely arranged side edges 22. Projecting outwardly from each side edge, generally adjacent respective rounded corners, there are provided first and second tether tabs 23, 24, each of which has a generally similar configuration as the tether tabs 13, 14 of the above-described first and second primary sheets 1, 2.

The secondary sheet 19 is furthermore provided with a pair of flow apertures 25, 26 formed through the fabric, which are of substantially identical form as the flow apertures 17, 18 which are provided in the first primary sheet 1. As will thus be noted, the two flow apertures 25, 26 in the secondary sheet 19 are thus both generally elliptical in form, with one (denoted by reference 25) being smaller than the other (denoted by reference 26). The two flow apertures 25, 26 in the secondary sheet are the same size as the respective flow apertures 17, 18 provided in the primary sheet 1, and are furthermore spaced apart from on another by the same distance as the two flow apertures 17, 18 provided in the primary sheet 1. The flow apertures 25, 26 are both centred on an axis of symmetry 27 about which the secondary sheet 19 is mirror-symmetrical.

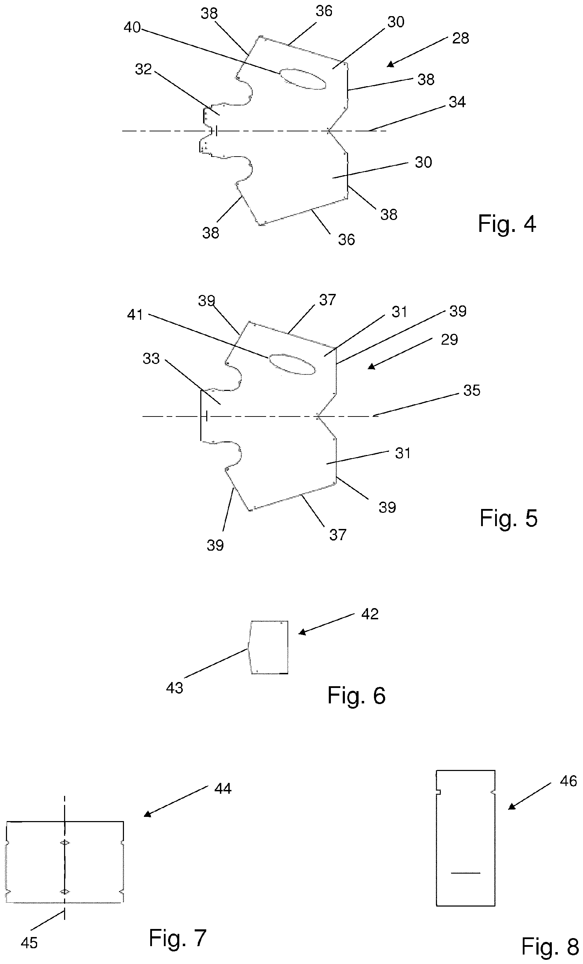

Figures 4 and 5 show first and second guide sheets 28, 29 of flexible material which, as will become apparent hereinafter, will cooperate to define an internal gas guide of the finished airbag. The guide sheets 28, 29 are preferably formed from the same woven fabric material as the primary sheets 1, 2 and the secondary sheet 19 and may also optionally have a similar coating applied to one side so as to reduce the fabric's permeability to inflating gas. However, in the specific embodiment illustrated, it is proposed that only the first guide sheet 28 will have such a coating, with the coating being applied to the upwardly facing surface in the orientation illustrated in figure 4.

The first and second guide sheets 28, 29 are of very similar although not exactly identical shape. More particularly, it will be noted that the guide sheets each have a generally "butterfly-shaped" configuration, and may thus each be considered to have a respective pair of wing regions 30, 31, and a respective tail region 32, 33. The peripheral shape of each guide sheet 28, 29 is substantially mirror-symmetrical about a respective axis of symmetry 34, 35.

As illustrated in figures 4 and 5, the wings 30, 31 of each guide sheet 28, 29 each have a respective long straight side edge 36, 37 which makes an acute angle to the sheet's axis of symmetry 34, 35, and a pair of short straight end edges 38, 39. One wing 30, 31 of each guide sheet 28, 29 is furthermore provided with a respective flow aperture 40, 41 formed through the fabric of the sheet. Both of the flow apertures 40, 41 are substantially identical, both in respect of shape and size, to the small flow apertures 17, 25 which are provided in the first primary sheet 1 and the secondary sheet 19. The flow apertures are thus generally elliptical in form, and each is oriented such that its major axis is parallel to the long side edge 36, 37 of the respective wing 30, 31 in which it is provided, and thus makes an acute angle to the axis of symmetry 34, 35 of the respective guide sheet 28, 29.

The only respect in which the two guide sheets 28, 29 differ from one another is that they have a slightly different edge profile at the end of their tail regions 32, 33.

Figure 6 illustrates a small reinforcing patch 42, which will preferably be formed from the same type of woven fabric material as the above-mentioned primary, secondary and guide sheets. The reinforcing patch 42 may take any convenient form, such as a simple rectangular configuration, although the specific configuration illustrated in figure 6 is pentagonal so to define a shallow point 43.

Figure 7 illustrates a first tether sheet 44 of flexible material, and which is preferably formed from the same type of woven fabric material as the above-mentioned primary, secondary and guide sheets. The first tether sheet 44 has a generally rectangular shape, and is thus mirror-symmetrical about a transverse axis of symmetry 45 about which the sheet may be folded to create a tether comprising a double thickness of fabric.

Figure 8 illustrates a second tether sheet 46 of flexible material, which is again preferably formed from the same type of woven fabric material as the above-mentioned primary, secondary and guide sheets. The second tether sheet 46 is elongate and generally rectangular.

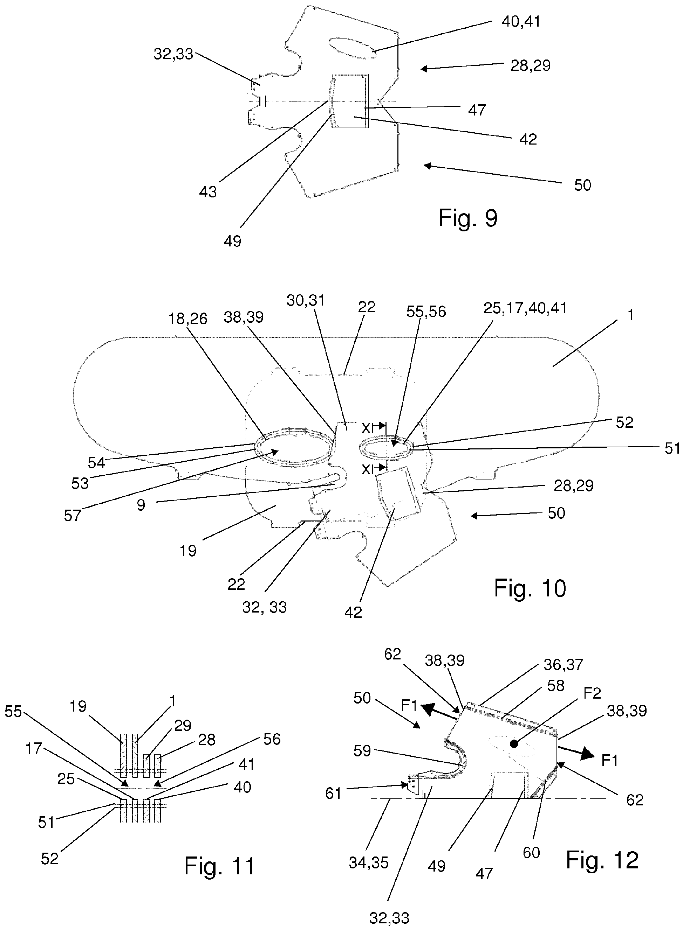

Figure 9 illustrates a possible initial step in the assembly of an airbag from the principle elements described above and illustrated in figures 1 to 8. The first guide sheet 28 is superimposed on top of the second guide sheet 29, such that the peripheral edges, wings 30, 31 and tails 32, 33 of the two guide sheets 28, 29 are all aligned (the second guide sheet 29 thus not being clearly visible in figure 9). As will thus be appreciated, the flow apertures 40, 41 of the two guide sheets 28, 29 are also thus aligned with one another. Following superimposition of the two guide sheets 28, 29, the reinforcing patch 42 is then positioned above and against the coated surface of the first guide sheet 28, in a generally central position in which the reinforcing patch 42 is adjacent the aligned flow apertures 40, 41, with its shallow point 43 pointing towards the aligned tail regions 32, 33. When the two guide sheets 28, 29 and the reinforcing patch 42 are all positioned and aligned in this manner, two interconnecting seams 47, 49 are then created, for example by stitching, in order to interconnect the fabric of the two guide sheets 28, 29 and the reinforcing patch 42 to form a partially completed gas guide 50.

Turning now to consider figure 10, the partially completed gas guide 50 shown in figure 9 is illustrated in a position in which it has been laid on top of the coated surface of the first primary sheet 1. More particularly, it will be noted that the aligned flow apertures 40, 41 of the two guide sheets 28, 29 are aligned with the similarly sized and shaped small flow aperture 17 provided in the first primary sheet 1. In this position, the aligned wings 30, 31 of the guide sheets 28, 29 which are provided with the flow apertures 40, 41 are positioned adjacent the large flow aperture 18 provided in the first primary sheet 1, but do not obstruct or extend over the large flow aperture 18. Indeed, in the embodiment illustrated, it will be noted that the proximate end edges 38, 39 of said wings 30, 31 are positioned so as to make a tangent to the periphery of the large flow aperture 18. As also illustrated in figure 10, the aligned tail regions 32, 33 of the two guide sheets 28, 29 are generally aligned with the inlet tab 9 of the first primary sheet 1.

As also illustrated in figure 10, the first primary sheet 1 is furthermore laid on top of the uncoated surface of the secondary sheet 19, the secondary sheet 19 thus being positioned beneath the first primary sheet 1. The secondary sheet 19 is orientated such that its relatively large flow aperture 26 is aligned with the relatively large flow aperture 18 of the first primary sheet 1, and such that its relatively small flow aperture 25 is aligned with the co-aligned small flow apertures of the first primary sheet 1 and the two guide sheets 28, 29.

Once the first primary sheet 1, the secondary sheet 19, and the partially completed gas guide 50 have been superimposed and aligned as described above, they are then interconnected by the creation of interconnecting seams around the two groups of aligned flow apertures. More specifically, and as illustrated in figure 10, a pair of concentric interconnecting seams 51, 52 are created, for example in the form of respective lines of stitching, which extend around the periphery of the aligned small flow apertures 17, 25, 40, 41, to interconnect the fabric of the first primary sheet 1, the secondary sheet 19, and the two guide sheets 28, 29. Additionally, a second pair of concentric interconnecting seams 53, 54 are also created, again for example in the form of respective lines of stitching, which extend around the periphery of the aligned large flow apertures 18, 26, to interconnect the fabric of the first primary sheet 1 and the secondary sheet 19. It is to be noted, however, that whilst two concentric seams are shown extending around each group of aligned apertures in figure 10, it is also possible to provide only one such seam around each group of aligned apertures.

Figure 11 is a schematic cross-sectional view taken along line XI-XI of figure 10 and thus shows in more detail the aligned small flow apertures 17, 25, 40, 41 of the first primary sheet 1, the second primary sheet 19, and the two superimposed guide sheets 28, 29 respectively. In this regard, and as will be clear hereinafter, the small apertures 17, 25 of the first primary sheet 1 and the secondary sheet 19, effectively cooperate to define a connecting flow port 55 which will be provided between the primary chamber and the secondary chamber of the airbag when it is fully constructed. Furthermore, the small apertures 40, 41 of the two superimposed guide sheets 28, 29 effectively cooperate in a similar manner to define an outlet 56 of the gas guide 50. As will be noted from figure 11, the resulting outlet 56 of the gas guide 50 is aligned with the connecting flow port 55. Although not illustrated in figure 11, it is also to be noted that in a generally similar manner, the large apertures 18, 26 of the first primary sheet 1 and the secondary sheet 19 effectively cooperate to define an additional flow port 57 (denoted in figure 10) which will be provided between the primary chamber and the secondary chamber of the airbag when it is fully constructed.

The gas guide 50 is then completed, as illustrated schematically in figure 12. This is achieved by folding the two superimposed guide sheets 28, 29 about their axes of symmetry 34, 35, such that all four of their wings 30, 31, and in particular the edges 36, 37, 38, 39 thereof, become aligned. The resulting four thicknesses of fabric are then interconnected by a series of seams, which again may each be provided in the form of one or more lines of stitching. More particularly, and as illustrated in figure 12, a straight interconnecting seam 58 is provided along the aligned side edges 36, 37, a curved interconnecting seam 59 is provided around the region extending between the wings and the tails of the guide sheets, and another straight interconnecting seam 60 is provided along the edge extending from the axes/fold lines 34, 35 to the wings. Importantly, neither the ends of the tails 32, 33, nor the end edges 38, 39 of the wings are interconnected by seams, and so these regions define openings to the resulting gas guide. More particularly, the opening at the tail regions 32, 33 defines a gas inlet 61 of the gas guide 50, which will be arranged to receive a flow of inflating gas into the gas guide 50 in the finished airbag, whilst the openings at the side edges 38, 39 of the wings define a pair of primary outlets 62 which, when the airbag is completed, will be arranged to direct inflating gas from the gas guide into the primary chamber of the airbag.

As will be noted, the primary outlets 62 of the gas guide 50 are arranged to direct respective flows of inflating gas outwardly from inside the gas guide in opposite first flow directions, as denoted by arrows F1 in figure 12. The outlet 56, which is defined by the aligned flow apertures 40, 41, represents a secondary outlet of the gas guide 50, and is thus arranged to direct inflating gas outwardly from inside the gas guide in a second flow direction, as denoted (into the page) by F2 in figure 12. As will thus be noted, the second flow direction F2 is thus orthogonal to both of the first flow directions F1.

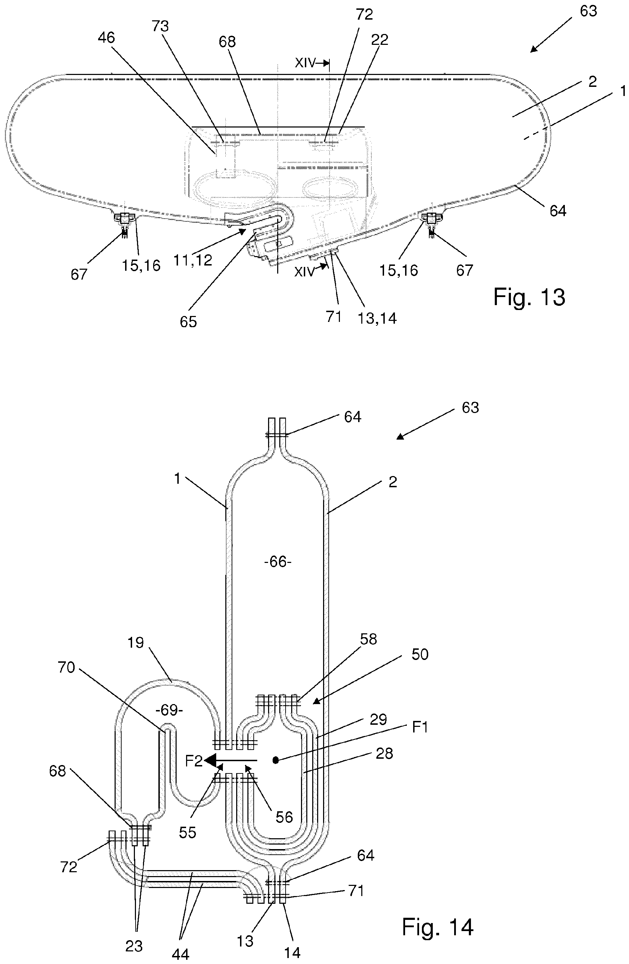

Turning now to consider figure 13, the airbag 63 may then be completed, to define the above-mentioned primary and secondary chambers. Firstly, the second primary sheet 2 is superimposed on the first primary sheet 1, with the coated surfaces of each primary sheets facing one another, as illustrated. The peripheral edges 5, 6 of the two primary sheets 1, 2 are aligned, and the two primary sheets 1, 2 are then interconnected by the creation of an interconnecting peripheral seam 64, which may comprise one or more lines of stitching, and which extends all of the way around the peripheral edges of the two sheets 1, 2 except across the end of the inlet tabs 9, 10. Optional fabric reinforcing elements 65 may be provided around the re-entrant regions 11, 12 and will be implicated in the peripheral seam 64 in that region. The two primary sheets 1, 2 thus cooperate to define the primary chamber 66 of the airbag 63, as shown most clearly in figure 14 which is a cross-sectional view taken along line XIV-XIV in figure 13. As will be noted, the gas guide 50 is thus provided inside the primary chamber 66.

Also shown in figure 13, are a pair of anchor fixtures 67 which may be connected to respective interconnected anchor tabs 15, 16 of the two primary sheets 1, 2, and which may be connected to the structure of a motor vehicle upon installation of the airbag 63 to ensure that the primary chamber 66 is securely restrained upon deployment of the airbag.

The secondary sheet 19 is then manipulated such that its two side edges 22, and their associated tether tabs 23, 24, are brought into abutment, whereupon the side edges 22 are interconnected by another seam 68. Further seams are then created along the end edges of the guide sheet 2 so as to create a closed inflatable volume defining the secondary chamber 69 of the airbag, as shown most clearly in figure 14. As will be noted, however, figure 14 actually shows the resulting secondary chamber 69 in folded configuration, in which one half of the secondary sheet 19 has been pushed inwardly, to create a re-entrant fold.

Also illustrated in figure 14 is the first tether sheet 44. As will be noted, the tether sheet 44 is actually shown in its folded configuration described above, in which it defines an elongate tether. One end of the tether is connected to the interconnected tether tabs 13, 14 of the primary sheets 1, 2 by a stitched seam 71, whilst the other end of the tether is connected to the interconnected first tether tabs 23 of the secondary sheet 19, by another stitched seam 72. Although not illustrated in figure 14, one end of the second tether sheet 46 is connected to the interconnected second tether tabs 24 of the secondary sheet in a similar manner by another stitched seam 73 (shown in figure 13).

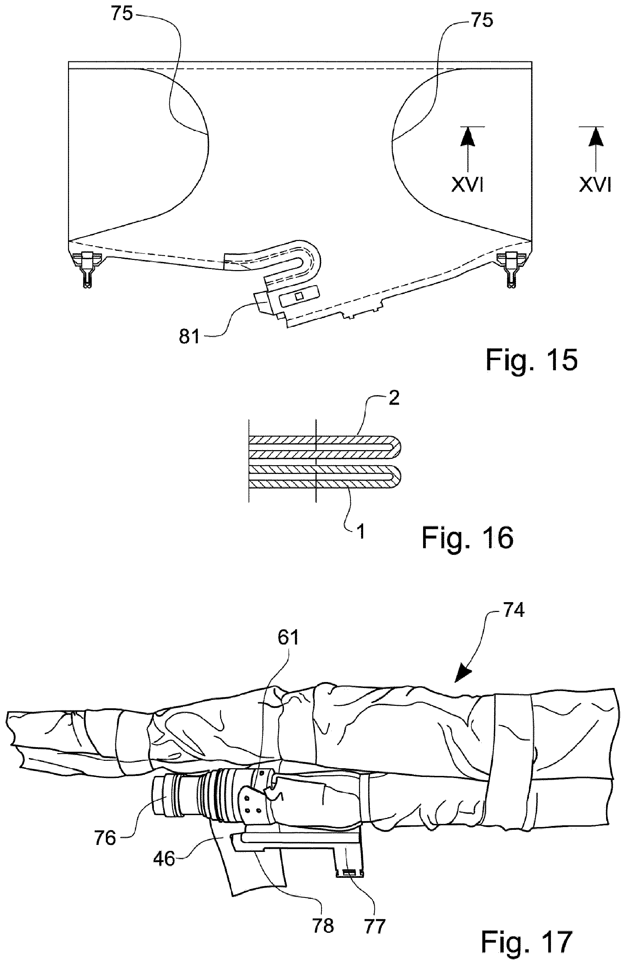

The airbag 63 will be provided in an initially folded and rolled package 74, as illustrated in figure 17. Figure 15 shows an initial stage of the packaging process, and in particular shows how the two ends of the primary chamber 66 of the airbag (shown in phantom in figure 15 and denoted by reference 75), and in particular the rounded end regions of the two primary sheets 1, 2 are folded inwardly. Figure 16 is a schematic cross sectional view along line XVI-XVI in figure 15, and shows how re-entrant folds are thus created in the end regions of the two primary sheets 1, 2. An inflator 76, such as a gas generator of a type known *per se*, is then inserted into the gas inlet 61 of the gas guide 50 inside the primary chamber 66, and a mounting bracket 77 may then be clampingly engaged around the inflator, trapping the material of the inlet tabs 9, 10 of the first and second primary sheets 1, and the inlet region of the gas guide 50 therebetween. The free end of the second tether sheet 46 is then connected to a mounting tab of the mounting bracket 77, for example via a slit 78 formed in the tether sheet. As will be appreciated, the inflator 76 and the airbag 63 may then be mounted to the structure of a motor vehicle.

Figure 18 illustrates one embodiment of a safety arrangement provided on a motor vehicle 79, which incorporates the airbag 63 described above, the airbag being provided in the form of a pedestrian airbag arranged to deploy over or across the windscreen 80 of the vehicle. The airbag 63 is shown in cross-section in a deployed configuration in which it has been inflated by gas produced by the gas generator 76. In more detail, it will be noted that the motor vehicle 79 is generally conventional, and has a scuttle structure 81 at the base of the windscreen 80 and generally beneath a rear part of a hood (or bonnet) 82. The hood 82 may be hingedly connected to the structure of the vehicle in the region of its front edge (not shown) such that its rear part may be lifted or raised as shown in figure 18. The vehicle 79 may also comprise one or more windscreen wipers 83 which, in a generally conventional manner, have an inoperative position in the region of the scuttle 81 as illustrated in figure 18.

In more detail, it will be noted that the inflator 76 is mounted to an undersurface 84 of the hood 82, in the region of the rearmost edge 85 of the hood, via the above-mentioned mounting bracket 77 (not shown in figure 18). The initially packaged airbag will thus normally be located beneath the rear part of the hood 82, generally between the scuttle 81 and the hood 82, and will extend generally transversely across the motor vehicle.

Upon actuation of the inflator 76, a large volume of inflating gas will be directed very rapidly into the gas guide 50 inside the primary chamber 66 of the airbag 63. Some of the inflating gas will then flow outwardly from the gas guide 50, via its two primary outlets 62, and into the primary chamber 66 in a pair of oppositely directed first flow directions F1 which are directed generally transversely across the vehicle 79 (into and out of the page in the orientation illustrated in figure 18). The primary chamber 66 will thus be inflated so as to adopt a deployed position in which it extends over or across the windscreen 80 as shown. However some of the inflating gas will also flow outwardly from the gas guide 50, via its secondary outlet 56 and the aligned connecting flow port 55 between the primary chamber 66 and the secondary chamber 69, and thus into the secondary chamber 69 in a second flow direction F2, thereby also inflating the secondary chamber 69. As will be noted, the second flow direction F2 is directed generally downwardly, towards the scuttle 81, and is thus substantially orthogonal to the two aligned first flow directions F1.

As will noted, whilst the primary chamber 66 is thus configured and arranged to deploy so as to extend over or across the windscreen 66, the second chamber 69 is configured and arranged so as to adopt a deployed position between part of the primary chamber 66 and the scuttle 81 of the vehicle. Indeed, in some embodiments it is proposed that when the airbag 63 is deployed with the hood 82 in its normal position, the secondary chamber 69 will impinge and bear against the scuttle 81 so as to lift the rear part of the hood 82, as shown, thereby facilitating substantially unrestricted deployment of the primary chamber 66. It is also to be noted that the first and second chambers 66, 69 deploy into abutting and superimposed positions with respect to one another.

As will be appreciated, the primary chamber 66 has a significantly larger inflatable volume than the secondary chamber 69, and in particular has a larger transverse dimension, measured across the vehicle 79, than the secondary chamber 66.

As also illustrated in figure 18, the secondary chamber 69 may be arranged and configured so as to adopt a deployed position generally adjacent the inoperative position of the or each windscreen wiper 83. This aspect of the arrangement helps to ensure that the primary chamber 66 will not snag on, or become damaged by, the or each windscreen wiper 83 as it deploys; the secondary chamber 69 effectively shielding the primary chamber 66 from the windscreen wipers 83. In other embodiments, the secondary chamber 69 may be arranged to deploy over or above the inoperative positions of the windscreen wipers, or even between the inoperative positions of adjacent windscreen wipers.

Figure 19 illustrates another embodiment of a safety arrangement provided on a motor vehicle 79, which incorporates the airbag 63 described above, the airbag again being provided in the form of a pedestrian airbag arranged to deploy over or across the windscreen 80 of the vehicle. The airbag 63 is again shown in cross-section in a deployed configuration in which it has been inflated by gas produced by the gas generator 76. As will be noted, in this embodiment the inflator 76 is mounted to the scuttle 81, at a position which will be located beneath the rear part of the hood when the hood is in its normal positon. The initially packaged airbag will thus normally be located beneath the rear part of the hood 82, generally between the scuttle 81 and the hood 82, and will extend generally transversely across the motor vehicle.

Upon actuation of the inflator 76, a large volume of inflating gas will be directed very rapidly into the gas guide 50 inside the primary chamber 66 of the airbag 63. Some of the inflating gas will then flow outwardly from the gas guide 50, via its two primary outlets 62, and into the primary chamber 66 in a pair of oppositely directed first flow directions F1 which are directed generally transversely across the vehicle 79 (into and out of the page in the orientation illustrated in figure 18). The primary chamber 66 will thus be inflated so as to adopt a deployed position in which it extends over or across the windscreen 80 as shown. However some of the inflating gas will also flow outwardly from the gas guide 50, via its secondary outlet 56 and the aligned connecting flow port 55 between the primary chamber 66 and the secondary chamber 69, and thus into the secondary chamber 69 in a second flow direction F2, thereby also inflating the secondary chamber 69. As will be noted, the second flow direction F2 is directed generally upwardly and forwardly, towards the hood 82, and is thus substantially orthogonal to the two aligned first flow directions F1.

As will noted, whilst the primary chamber 66 is thus configured and arranged to deploy so as to extend over or across the windscreen 66, the secondary chamber 69 is configured and arranged so as to adopt a deployed position between part of the primary chamber 66 and the hood 82 of the vehicle. Indeed, in such embodiments it is proposed that when the airbag 63 is deployed with the hood 82 in its normal position, the secondary chamber 69 will impinge and bear against the hood 82 so as to lift the rear part of the hood 82, as shown, thereby facilitating substantially unrestricted deployment of the primary chamber 66. It is also to be noted that the first and second chambers 66, 69 again deploy into abutting and superimposed positions with respect to one another.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

## Claims

1. An inflatable airbag (63) for a motor vehicle safety device, the airbag having an inflatable volume for the receipt of inflating gas, said inflatable volume comprising a primary chamber (66) and a secondary chamber (69), said secondary chamber (69) being fluidly connected to said primary chamber (66) via a connecting flow port (55) arranged between the chambers, the airbag being **characterised by** a gas guide (50) provided inside the primary chamber (66) and which has: a gas inlet (61) arranged to receive a flow of said inflating gas into the gas guide (50); a primary outlet (62) arranged to direct some of said inflating gas into the primary chamber (66) in a first flow direction (F1) to inflate the primary chamber (69); and a secondary outlet (56) aligned with said connecting flow port (55) and arranged to direct some of said inflating gas through said connecting flow port (55) and into the secondary chamber (69) in a second flow direction (F2) to inflate the secondary chamber (69); said first and second chambers (66, 69) thereby being configured to deploy into abutting and superimposed positions upon inflation, and wherein said first and second flow directions (F1,F2) are substantially orthogonal.

2. An inflatable airbag according to claim 1, wherein said secondary outlet (56) of the gas guide (50) is coincident with the connecting flow port (55) between said primary and secondary (66, 69) chambers.

3. An airbag according to claim 2, wherein the gas guide (50) is fixed in position inside said primary chamber (66) at least partly by a connection (51, 52) extending around said secondary outlet (56) of the gas guide (50) and said connecting flow port (55), and which interconnects said gas guide (50) and said primary chamber (66).

4. An inflatable airbag according to claim 2 or claim 3, wherein said gas guide (50), and said primary and secondary chambers (66, 69) are formed from flexible sheet material, the gas guide (50) being fixed in position inside said primary chamber (66) at least partly by an interconnecting seam (51, 52) which: extends around said secondary outlet (56) of the gas guide (50) and said connecting flow port (55); and interconnects the flexible sheet material of said gas guide (50) and said primary chamber (66).

5. An inflatable airbag according to claim 4, wherein the flexible sheet material of said secondary chamber (69) is implicated in said interconnecting seam (51, 52) such that the seam interconnects said gas guide (50), said primary chamber (66) and said secondary chamber (69).

6. An inflatable airbag according to any preceding claim, wherein said gas guide (50) has two said primary outlets (62) arranged to direct respective flows of said inflating gas into said primary chamber (66) in opposite first flow directions (F1) to inflate the primary chamber (66).

7. An inflatable airbag according to any preceding claim, having at least one additional flow port (57) provided between said primary and secondary chambers (66, 69), wherein the or each said additional flow port (57) is arranged to permit inflating gas to flow from one said chamber to the other.

8. An inflatable airbag according to any preceding claim, provided in the form of a pedestrian airbag arrangement on a motor vehicle (79) having a hood (82), a windscreen (80), and a scuttle (81) at the base of the windscreen (80), wherein: said primary chamber (66) is configured for inflation, upon deployment of the airbag (63), so as to extend over or across at least part of the windscreen (80); and said secondary chamber (66) is configured for inflation, upon deployment of the airbag (63), so as to adopt a deployed position between part of the primary chamber (66) and the scuttle (81).

9. An inflatable airbag according to claim 8, wherein the motor vehicle (79) has at least one windscreen wiper (83) having an inoperative position in the region of said scuttle (81), said deployed position of the secondary chamber (69) being above or adjacent the inoperative position of the or at least one said windscreen wiper (83) .

10. An inflatable airbag according to claim 8 or claim 9, provided in combination with an inflator (76) arranged to direct inflating gas into said gas guide (50), wherein the inflator (76) is mounted to the underside (84) of the hood (82).

11. An inflatable airbag according to claim 10, wherein said second flow direction (F2) is directed generally downwardly, towards the scuttle (81).

12. An inflatable airbag according to any one of claims 1 to 7, provided in the form of a pedestrian airbag arrangement on a motor vehicle (79) having a hood (82), a windscreen (80) and a scuttle (81) at the base of the windscreen, wherein: said primary chamber (66) is configured for inflation, upon deployment of the airbag (63), to as to extend over or across at least part of the windscreen (80); and said secondary chamber (69) is configured, upon deployment of the airbag (63), so as to adopt a deployed position between part of the primary chamber (66) and the hood (80).

13. An inflatable airbag according to claim 12, provided in combination with an inflator (76) arranged to direct inflating gas into said gas guide (50), wherein the inflator (76) is mounted to the scuttle (81).

14. An inflatable airbag according to claim 13, wherein said second flow direction (F2) is directed generally upwardly, towards said hood (82).

15. An inflatable airbag according to any one of claims claim 8 to 14, wherein said secondary chamber (69) is configured to lift a rear part of the hood (82) during inflation.

## Patentansprüche

1. Aufblasbarer Airbag (63) für eine Sicherheitsvorrichtung eines Fahrzeugs, wobei der Airbag ein aufblasbares Volumen zum Aufnehmen von Füllgas aufweist, wobei das aufblasbare Volumen eine Primärkammer (66) und eine Sekundärkammer (69) umfasst, wobei die Sekundärkammer (69) mit der Primärkammer (66) über eine Verbindungsströmungsöffnung (55) fluidverbunden ist, die zwischen den Kammern angeordnet ist, wobei der Airbag **gekennzeichnet ist durch** eine Gasführung (50), die in der Primärkammer (66) vorgesehen ist und Folgendes aufweist: eine Gaseinlassöffnung (61), die so angeordnet ist, dass sie einen Strom des Füllgases in die Gasführung (50) hinein aufnimmt; eine Primärauslassöffnung (62), die so angeordnet ist, dass sie einen Teil des Füllgases in die Primärkammer (66) hinein in einer ersten Strömungsrichtung (F1) leitet, damit die Primärkammer (69) aufgeblasen wird; und eine Sekundärauslassöffnung (56), die nach der Verbindungsströmungsöffnung (55) ausgerichtet und so angeordnet ist, dass sie einen Teil des Füllgases durch die Verbindungsströmungsöffnung (55) und in die Sekundärkammer (69) hinein in einer zweiten Strömungsrichtung (F2) leitet, damit die Sekundärkammer (69) aufgeblasen wird; wobei die erste und zweite Kammer (66, 69) dadurch so eingerichtet sind, dass sie sich beim Aufblasen in eine aneinandergrenzende und übereinanderliegende Position entfalten, und wobei die erste und zweite Strömungsrichtung (F1, F2) im Wesentlichen rechtwinklig verlaufen.

2. Aufblasbarer Airbag nach Anspruch 1, wobei die sekundäre Auslassöffnung (56) der Gasführung (50) mit der Verbindungsströmungsöffnung (55) zwischen der Primär- und Sekundärkammer (66, 69) zusammenfällt.

3. Airbag nach Anspruch 2, wobei die Gasführung (50) in der Primärkammer (66) zumindest teilweise durch eine Verbindung (51, 52) fixiert ist, die um die sekundäre Auslassöffnung (56) der Gasführung (50) und die Verbindungsströmungsöffnung (55) herum verläuft, und die die Gasführung (50) mit der Primärkammer (66) verbindet.

4. Aufblasbarer Airbag nach Anspruch 2 oder Anspruch 3, wobei die Gasführung (50) sowie die Primär- und Sekundärkammer (66, 69) aus flexiblem Bahnmaterial geformt sind, die Gasführung (50) in der Primärkammer (66) zumindest teilweise durch eine Verbindungsnaht (51, 52) fixiert ist, die: um die sekundäre Auslassöffnung (56) der Gasführung (50) und die Verbindungsströmungsöffnung (55) herum verläuft und das flexible Bahnmaterial der Gasführung (50) und der Primärkammer (66) miteinander verbindet.

5. Aufblasbarer Airbag nach Anspruch 4, wobei das flexible Bahnmaterial der sekundären Kammer (69) in der Verbindungsnaht (51, 52) derart einbezogen ist, dass die Naht die Gasführung (50), die Primärkammer (66) und die Sekundärkammer (69) miteinander verbindet.

6. Aufblasbarer Airbag nach einem der vorhergehenden Ansprüche, wobei die Gasführung (50) zwei primäre Auslassöffnungen (62) aufweist, die so angeordnet sind, dass sie jeweilige Ströme des Füllgases in entgegengesetzte erste Strömungsrichtungen (F1) in die Primärkammer (66) hineinleiten, damit die Primärkammer (66) aufgeblasen wird.

7. Aufblasbarer Airbag nach einem der vorhergehenden Ansprüche, der mindestens eine zusätzliche Strömungsöffnung (57) aufweist, die zwischen der Primär- und Sekundärkammer (66, 69) vorgesehen ist, wobei die oder jede zusätzliche Strömungsöffnung (57) so angeordnet ist, dass sie Füllgas aus einer Kammer zu der anderen strömen lässt.

8. Aufblasbarer Airbag nach einem der vorhergehenden Ansprüche, der in der Form einer Fußgängerairbaganordnung an einem Kraftfahrzeug (79) vorgesehen ist, das eine Motorhaube (82), eine Windschutzscheibe (80) sowie einen Windlauf (81) unten an der Windschutzscheibe (80) aufweist, wobei: die Primärkammer (66) so eingerichtet ist, dass sie sich beim Entfalten des Airbags (63) aufbläst und so über oder quer über zumindest einen Teil der Windschutzscheibe (80) verläuft, und die Sekundärkammer (66) so eingerichtet ist, dass sie sich beim Entfalten des Airbags (63) aufbläst und so eine entfaltete Position zwischen einem Teil der Primärkammer (66) und dem Windlauf (81) einnimmt.

9. Aufblasbarer Airbag nach Anspruch 8, wobei das Kraftfahrzeug (79) zumindest ein Wischerblatt (83) mit einer Ruhestellung im Bereich des Windlaufs (81) aufweist, wobei sich die entfaltete Stellung der Sekundärkammer (69) über der oder angrenzend an die Ruhestellung des oder zumindest eines Wischerblatts (83) befindet.

10. Aufblasbarer Airbag nach Anspruch 8 oder Anspruch 9, der in Verbindung mit einem Gasgenerator (76) vorgesehen ist, der so angeordnet ist, dass er Füllgas in die Gasführung (50) hineinleitet, wobei der Gasgenerator (76) an der Unterseite (84) der Motorhaube (82) montiert ist.

11. Aufblasbarer Airbag nach Anspruch 10, wobei die zweite Strömungsrichtung (F2) im Allgemeinen nach unten in Richtung des Windlaufs (81) gerichtet ist.

12. Aufblasbarer Airbag nach einem der Ansprüche 1 bis 7, der in Form einer Fußgängerairbaganordnung an einem Kraftfahrzeug (79) vorgesehen ist, das eine Motorhaube (82), eine Windschutzscheibe (80) sowie einen Windlauf (81) unten an der Windschutzscheibe aufweist, wobei: die Primärkammer (66) so eingerichtet ist, dass sie sich beim Entfalten des Airbags (63) aufbläst und so über oder quer über zumindest einen Teil der Windschutzscheibe (80) verläuft, und die Sekundärkammer (69) so eingerichtet ist, dass sie sich beim Entfalten des Airbags (63) aufbläst und so eine entfaltete Position zwischen einem Teil der Primärkammer (66) und der Motorhaube (80) einnimmt.

13. Aufblasbarer Airbag nach Anspruch 12, der in Verbindung mit einem Gasgenerator (76) vorgesehen ist, der so angeordnet ist, dass er Füllgas in die Gasführung (50) hineinleitet, wobei der Gasgenerator (76) an dem Windlauf (81) montiert ist.

14. Aufblasbarer Airbag nach Anspruch 13, wobei die zweite Strömungsrichtung (F2) im Allgemeinen nach oben in Richtung der Motorhaube (82) gerichtet ist.

15. Aufblasbarer Airbag nach einem der Ansprüche 8 bis 14, wobei die Sekundärkammer (69) so eingerichtet ist, dass sie beim Aufblasen einen hinteren Teil der Motorhaube (82) anhebt.

## Revendications

1. Coussin de sécurité gonflable (63) destiné au dispositif de sécurité d'un véhicule motorisé, le coussin de sécurité disposant d'un volume gonflable destiné à recevoir du gaz de gonflage, ledit volume gonflable comprenant une chambre primaire (66) et une chambre secondaire (69), ladite chambre secondaire (69) étant en communication fluidique avec ladite chambre primaire (66) par le biais d'un orifice d'écoulement de liaison (55) agencé entre les chambres, le coussin de sécurité étant **caractérisé par** un dispositif de guidage de gaz (50) prévu à l'intérieur de la chambre primaire (66) et présentant : une entrée de gaz (61) agencée pour recevoir un écoulement dudit gaz de gonflage vers le dispositif de guidage de gaz (50), une sortie primaire (62) agencée pour diriger une partie dudit gaz de gonflage vers la chambre primaire (66) dans un premier sens d'écoulement (F1) afin de gonfler la chambre primaire (69), et une sortie secondaire (56) dans l'alignement dudit orifice d'écoulement de liaison (55) et agencée pour diriger une partie dudit gaz de gonflage dans ledit orifice d'écoulement de liaison (55) et vers la chambre secondaire (69) dans un second sens d'écoulement (F2) afin de gonfler la chambre secondaire (69) ; lesdites chambres primaire et secondaire (66, 69) étant ainsi conçues pour se déployer pour prendre des positions juxtaposées et superposées lors du gonflage, et lesdits premier et second sens d'écoulement (F1, F2) étant sensiblement orthogonaux.

2. Coussin de sécurité gonflable selon la revendication 1, dans lequel ladite sortie secondaire (56) du dispositif de guidage de gaz (50) coïncide avec l'orifice d'écoulement de liaison (55) entre lesdites chambres primaire et secondaire (66, 69).

3. Coussin de sécurité gonflable selon la revendication 2, dans lequel le dispositif de guidage de gaz (50) est fixé en place à l'intérieur de ladite chambre primaire (66), au moins en partie à l'aide d'un raccord (51, 52) entourant ladite sortie secondaire (56) du dispositif de guidage de gaz (50) et ledit orifice d'écoulement de liaison (55) et qui rassemble ledit dispositif de guidage de gaz (50) et ladite chambre primaire (66).

4. Coussin de sécurité gonflable selon la revendication 2 ou la revendication 3, dans lequel ledit dispositif de guidage de gaz (50) et lesdites chambres primaire et secondaire (66, 69) sont réalisés dans un matériau laminaire souple, le dispositif de guidage de gaz (50) étant fixé en place à l'intérieur de ladite chambre primaire (66) au moins partiellement à l'aide d'une couture d'assemblage (51, 52) qui entoure ladite sortie secondaire (56) du dispositif de guidage de gaz (50) et ledit orifice d'écoulement de liaison (55) et qui rassemble le matériau laminaire souple dudit dispositif de guidage de gaz (50) et de ladite chambre primaire (66).

5. Coussin de sécurité gonflable selon la revendication 4, dans lequel le matériau laminaire souple de ladite chambre secondaire (69) est impliqué dans ladite couture d'assemblage (51, 52) de manière que la couture rassemble ledit dispositif de guidage de gaz (50), ladite chambre primaire (66) et ladite chambre secondaire (69).

6. Coussin de sécurité gonflable selon l'une quelconque des revendications précédentes, dans lequel ledit dispositif de guidage de gaz (50) présente deux desdites sorties primaires (62) agencées pour diriger des écoulements respectifs dudit gaz de gonflage vers ladite chambre primaire (66) selon des premiers sens d'écoulement (F1) opposés afin de gonfler la chambre primaire (66).

7. Coussin de sécurité gonflable selon l'une quelconque des revendications précédentes, présentant au moins un orifice d'écoulement supplémentaire (57) prévu entre lesdites chambres primaire et secondaire (66, 69), ledit ou lesdits orifices d'écoulement supplémentaires (57) étant agencés pour permettre au gaz de gonflage de s'écouler d'une desdites chambres à l'autre.

8. Coussin de sécurité gonflable selon l'une quelconque des revendications précédentes, prévu sous la forme d'un ensemble formant coussin de sécurité pour piéton sur un véhicule motorisé (79) possédant un capot (82), un pare-brise (80) et une baie de pare-brise (81) à la base du pare-brise (80), dans lequel ladite chambre primaire (66) est conçue pour se gonfler, lors du déploiement du coussin de sécurité (63), de manière à recouvrir au moins une partie du pare-brise (80), et ladite chambre secondaire (66) est conçue pour se gonfler, lors du déploiement du coussin de sécurité (63), de manière à prendre une position déployée entre une partie de la chambre primaire (66) et la baie de pare-brise (81).

9. Coussin de sécurité gonflable selon la revendication 8, dans lequel le véhicule motorisé (79) possède au moins un essuie-glace (83) présentant une position de repos dans la région de ladite baie de pare-brise (81), ladite position déployée de la chambre secondaire (69) étant au-dessus ou contiguë à la position de repos dudit ou desdits essuie-glaces (83).

10. Coussin de sécurité gonflable selon la revendication 8 ou la revendication 9, prévu en association avec un gonfleur (76) agencé pour diriger le gaz de gonflage vers ledit dispositif de guidage de gaz (50), ledit gonfleur (76) étant monté sur le dessous (84) du capot (82).

11. Coussin de sécurité gonflable selon la revendication 10, dans lequel ledit second sens d'écoulement (F2) est dirigé globalement vers le bas, vers la baie de pare-brise (81).

12. Coussin de sécurité gonflable selon l'une quelconque des revendications 1 à 7, prévu sous la forme d'un ensemble formant coussin de sécurité pour piéton sur un véhicule motorisé (79) possédant un capot (82), un pare-brise (80) et une baie de pare-brise (81) à la base du pare-brise, dans lequel ladite chambre primaire (66) est conçue pour se gonfler, lors du déploiement du coussin de sécurité (63), de manière à recouvrir au moins une partie du pare-brise (80), et ladite chambre secondaire (69) est conçue, lors du déploiement du coussin de sécurité (63), de manière à prendre une position déployée entre une partie de la chambre primaire (66) et le capot (80).

13. Coussin de sécurité gonflable selon la revendication 12, prévu en association avec un gonfleur (76) agencé pour diriger du gaz de gonflage vers ledit dispositif de guidage de gaz (50), ledit gonfleur (76) étant monté sur la baie de pare-brise (81).

14. Coussin de sécurité gonflable selon la revendication 13, dans lequel ledit second sens d'écoulement (F2) est dirigé globalement vers le haut, vers ledit capot (82).

15. Coussin de sécurité gonflable selon l'une quelconque des revendications 8 à 14, dans lequel ladite chambre secondaire (69) est conçue pour soulever une partie arrière du capot (82) pendant le gonflage.
